# EUROPÄISCHE PATENTSCHRIFT

(11) **EP 1 187 885 B1**
(45) Veröffentlichungstag und Bekanntmachung des Hinweises auf die Patenterteilung: **13.11.2002**
(21) Anmeldenummer: 00936787.1
(22) Anmeldetag: 24.05.2000
(51) Int. Cl.: C09D 7/12

(54) **MIT NANOPARTIKELN MODIFIZIERTE BINDEMITTEL FÜR ÜBERZUGSMITTEL UND DEREN VERWENDUNG**
BINDING AGENTS MODIFIED BY NANOPARTICLES FOR COATING AGENTS AND USE OF THE SAME
LIANTS MODIFIES A L'AIDE DE NANOPARTICULES POUR SUBSTANCES DE REVETEMENT ET UTILISATION DESDITS LIANTS

(30) Priorität: 02.06.1999 DE 19925331
(43) Veröffentlichungstag der Anmeldung: 20.03.2002
(73) Patentinhaber: E.I. DU PONT DE NEMOURS AND COMPANY, Wilmington Delaware 19898 (US)
(72) Erfinder: DÜCOFFRE, Volker, D-42119 Wuppertal (DE); FLOSBACH, Carmen, D-42287 Wuppertal (DE); TÄNNERT, Klaus, D-42389 Wuppertal (DE); WEIDENHAMMER, Petra, D-81827 München (DE)
(74) Vertreter: Gille Hrabal Struck Neidlein Prop Roos
(86) Internationale Anmeldenummer: EP0004695
(87) Internationale Veröffentlichungsnummer: WO00075244

(56) Entgegenhaltungen:
- WO-A-95/27012
- DATABASE WPI Section Ch, Week 199641 Derwent Publications Ltd., London, GB; Class A18, AN 1996-408590 XP002150077 & JP 08 199090 A (NIPPON CARBIDE KOGYO KK) , 6. August 1996 (1996-08-06)

## Beschreibung

Die Erfindung betrifft mit Nanopartikeln modifizierte Bindemittel für Lacksysteme, diese enthaltende Überzugsmittel und deren Anwendung.

Nanopartikel enthaltende Lacksysteme sind Stand der Technik. Die Nanopartilcel führen zu einem verbesserten Eigenschaftsbild der Lacksysteme beispielsweise hinsichtlich Kratzfestigkeit, Lösemittel- und Chemikalienbeständigkeit. Beispielsweise beschreibt die EP-A-0 832 947 kratzfeste Klarlacke auf Basis eines Bindemittel/Vernetzersystems und reaktive Gruppen auf der Partikeloberfläche aufweisenden Nanopartikeln. Desweiteren beschreibt die EP-A-0 872 500 kratzfeste Überzugsmittel auf Basis einer Kombination von hydroxyfunktionellen Bindemitteln mit blockierte Isocyanatgruppen auf der Partikeloberfläche aufweisenden Nanopartikeln. Beirn Härten der aus diesen Überzugsmitteln applizierten Überzugsschichten werden die Nanopartikel in die Überzugsschicht chemisch eingebunden. Die WO 95/27012 beschreibt eine Beschichtungszusammensetzung, die ein Gemisch aus einem filmbildenden Polyepoxid mit carboxylfunktionellen polymeren Mikroteilchen mit einer Teilchengröße von 1 bis 5000 nm enthalten. Der Gehalt an Mikroteilchen soll die Ablaufneigung der Überzugsmittel verhindern.

Es kann Verträglichkeitsprobleme bei der Einarbeitung von Nanopartikeln in Lacksysteme geben. Beispielsweise ergibt sich bei Nanopartikel enthaltenden Lacksystemen des Standes der Technik mitunter eine inhomogene Verteilung der Nanopartikel in den aus diesen Überzugsmitteln applizierten Überzugsschichten oder eine homogene Verteilung der Nanopartikel in den Überzugsmitteln als solchen ist von Anfang an schwierig, wenn nicht gar unmöglich.

Es besteht die Aufgabe derartige Verträglichkeitsprobleme in Nanopartikel enthaltenden Lacksystemen zu beseitigen oder weitgehend zu vermeiden.

Die Aufgabe kann gelöst werden durch Umsetzung von carboxylfunktionellen Nanopartikeln mit epoxidfunktionellen Bindemitteln zu mit Nanopartikeln modifizierten Lackbindemitteln.

Ein Gegenstand der Erfindung sind daher mit Nanopartikeln modifizierte Bindemittel, die hergestellt werden, indem man carboxylfunktionelle Nanopartikel mit epoxidfunktionellen Bindemitteln umsetzt, wie im Anspruch 1 definiert.

Bei den Nanopartikeln handelt es sich um übliche dem Fachmann bekannte Partikel aus dem "Nanometer"-Größenbereich, beispielsweise mit einer mittleren Teilchengröße von 5 bis 200 nm, bevorzugt 10 bis 100 nm, die Carboxylgruppen insbesondere an der Partikeloberfläche enthalten. Die Nanopartikel können einphasig aufgebaut sein oder einen Kern/Hülle-Aufbau besitzen. Einphasig aufgebaute Nanopartikel enthalten Carboxylgruppen, insbesondere an der Partikeloberfläche. Im Falle von aus Kern und Hülle aufgebauten Nanopartikeln sind die Carboxylgruppen Bestandteil der Hülle und gegebenenfalls zusätzlich des Kerns. Die Säurezahl der carboxylfunktionellen Nanopartikel beträgt beispielsweise 20 bis 200 mg KOH/g. Neben den Carboxylgruppen können die Nanopartikel auch weitere eine Epoxy/Carboxy-Reaktion nicht störende funktionelle Gruppen enthalten.

Die einphasig aufgebauten Nanopartikel sind anorganischer Natur und mit Carboxylgruppen und gegebenenfalls weiteren organischen Reste modifiziert. Beispielsweise handelt es sich um Element-Sauerstoff-Netzwerke mit Elementen aus der Reihe Aluminium, Bor, Titan, Zirkon und/oder Silizium, bevorzugt Silizium.

Bevorzugt handelt es sich den einphasig aufgebauten Nanopartikeln um teilchenförmige aluminium-, bor-, titan-, zirkon- und/oder siliziumorganische, besonders bevorzugt siliziumorganische Polymere (Ia) der Formel (R₃SiO_{1/2})_{w}(R₂SiO_{2/2})ₓ(RSiO_{3/2})_{y}(SiO_{4/2})_{z} wobei y = 10 bis 100 Mol-% und die Summe aus w, x, y, und z 100 Mol-% betragen soll. Bei den gleichen oder verschiedenen Resten R kann es sich neben Carboxylgruppen aufweisenden Resten um C1-C6-Alkylreste, insbesondere Methylreste, Alkenylreste, wie z.B. Vinyl- und Allylrest, Arylreste, wie z.B. Phenylrest oder substituierte Kohlenwasserstoffreste, wie z.B. Mercaptoalkyl-, Cyanoalkyl-, Aminoalkyl-, Acyloxyalkyl-, wie 3-(Meth)acryloyloxypropyl-, und Hydroxyalkylreste handeln. Die Carboxylgruppen können dabei beispielsweise durch geeignete Umsetzung geeigneter Reste R erzeugt worden sein, beispielsweise durch Verseilung von Cyanoalkylresten oder durch Oxidation geeigneter Reste R. Die Carboxylgruppen können auch direkt bei der Herstellung der siliziumorganischen Polymeren (Ia) eingeführt werden.

Die Herstellung solcher siliziumorganischer Polymere (Ia) kann z.B. nach einem einstufigen Emulsionspolymerisationsverfahren beispielsweise durch Zudosieren eines monomeren Silans RSi(OR')₃ oder eines Gemisches monomerer Silane vom Typ RₐSi(OR')₄₋ₐ, wobei a = 0, 1, 2 oder 3 ist, zu einer bewegten Emulgator/Wasser-Mischung erfolgen. Ebenfalls möglich ist eine zweistufige Verfahrensweise des Emulsionspolymerisationsverfahrens, wobei die in der ersten Verfahrensstufe umgesetzten Silane bevorzugt keine Carboxylgruppen aufweisenden Reste R besitzen und die Umsetzung der Silane mit Carboxylgruppen aufweisenden Resten R erst in der 2. Verfahrensstufe erfolgt. R hat die bereits benannte Bedeutung. R' steht für C1-C6-Alkylreste, Arylreste oder substituierte Kohlenwasserstoffreste. Prinzip und Einzelheiten der Durchführung solcher Emulsionspolymerisationsverfahren sind dem Fachmann bekannt, beispielsweise aus der EP-A-0 492 376.

Bei den aus Kern und Hülle aufgebauten Nanopartikeln ist der Kern anorganischer Natur und ist gegebenenfalls durch weitere organische Reste modifiziert. Beispielsweise handelt es sich um Element-Sauerstoff-Netzwerke mit Elementen aus der Reihe Aluminium, Bor, Titan, Zirkon und/oder Silizium, bevorzugt Silizium.

Es kann sich bei den Kernen auch um kolloidale Metalloxide handeln, bevorzugt ist dem Fachmann bekanntes kolloidales Silziumdioxid, beispielsweise als Pulver oder als Dispersion in einem wäßrigen oder anderen organischen Lösemittel.

Bevorzugt handelt es sich bei den Kernen von aus Kern und Hülle aufgebauten Nanopartikeln um aluminium-, bor-, titan-, zirkon- und/oder siliziumorganische, besonders bevorzugt siliziumorganische Polymere (Ib) der Formel (R"₃SiO_{1/2})_{w}(R"₂SiO_{2/2})ₓ(R"SiO_{3/2})_{y}(SiO_{4/2})_{z}, wobei y = 10 bis 100 Mol-% und die Summe aus w, x, y und z 100 Mol-% betragen soll. Bei den gleichen oder verschiedenen Resten R" kann es sich um Carboxylgruppen aufweisende Reste, C1-C6-Alkylreste, insbesondere Methylreste, Alkenylreste, wie z.B. Vinyl- und Allylreste, Arylreste, wie z.B. Phenylrest oder substituierte Kohlenwasserstoffreste, wie z.B. Mercaptoalkyl-, Cyanoalkyl-, Aminoalkyl-, Acyloxyalkyl-, wie 3-(Meth)acryloyloxypropyl-, und Hydroxyalkylreste handeln. Die Carboxylgruppen können dabei beispielsweise durch geeignete Umsetzung geeigneter Reste R" erzeugt worden sein, beispielsweise durch Verseifung von Cyanoalkylresten oder durch Oxidation geeigneter Reste R". Die Carboxylgruppen können auch direkt bei der Herstellung der siliziumorganischen Polymere (Ib) eingeführt werden.

Die Herstellung solcher siliziumorganischer Polymere (Ib) kann z.B. nach dem Emulsionspolymerisationsverfahren beispielsweise durch Zudosieren eines monomeren Silans R"Si(OR')₃ oder eines Gemisches monomerer Silane vom Typ R"ₐSi(OR')₄₋ₐ, wobei a = 0,1,2 oder 3 ist, zu einer bewegten Emulgator/Wasser-Mischung erfolgen. R" hat die bereits benannte Bedeutung. R'steht für C1-C6-Alkylreste, Arylreste oder substituierte Kohlenwasserstoffreste. Prinzip und Einzelheiten der Durchführung solcher Emulsionspolymerisationsverfahren sind dem Fachmann bekannt, beispielsweise aus der EP-A-0 492 376.

Im Falle von aus Kern und Hülle aufgebauten Nanopartikeln sind die Kerne beispielsweise vom Typ (Ib) bevorzugt mit einem carboxylfunktionellen (Meth)acrylcopolymeren umhüllt. Zur Herstellung der aus Kern und carboxylfunktioneller (Meth)acrylcopolymerhülle aufgebauten Nanopartikel werden (meth)acrylisch ungesättigte Monomere in Gegenwart der Kerne radikalisch polymerisiert, beispielsweise emulsionspolymerisiert, beispielsweise im Sinne einer Pfropfpolymerisation auf die Kerne. Zur Einführung der Carboxylgruppen in die (Meth)acrylcopolymerhülle werden bei der Polymerisation bevorzugt geeignete carboxylgruppenhaltige ungesättigte Monomere, wie z.B. Acryl-, Methacryl-, Itacon-, Croton, Isocroton-, Aconit-, Malein- und Fumarsäure, Halbester der Malein- und Fumarsäure sowie Carboxyalkylester der (Meth)acrylsäure, z.B. beta-Carboxyethylacrylat und Addukte von Hydroxyalkyl(meth)acrylaten mit Carbonsäureanhydriden, wie z.B. der Phthalsäure-mono-2-(meth)acryloyloxyethylester eingesetzt oder mitverwendet. Die carboxyfunktionellen Monomeren werden dabei im allgemeinen gemeinsam mit davon unterschiedlichen radikalisch copolymerisierbaren olefinisch ungesättigten Monomeren eingesetzt. Prinzip und Einzelheiten der Durchführung radikalischer Polymerisationen, beispielsweise Emulsionspolymerisationen sind dem Fachmann bekannt.

Die carboxyfunktionellen Nanopartikel werden mit epoxidfunktionellen Bindemitteln umgesetzt.

Bei den zur Umsetzung mit den carboxyfunktionellen Nanopartikeln geeigneten epoxidfunktionellen Bindemitteln bestehen keine Beschränkungen. Es kann sich beispielweise um epoxidfunktionelle Polyester, epoxidfunktionelle Polyurethane, bevorzugt aber um epoxidfunktionelle (Meth)acrylcopolymere, jedoch auch um andere epoxidfunktionelle Polymere, beispielsweise epoxidierte Polybutadienderivate, Polyglycidylether, beispielsweise von Bisphenol A handeln. Die epoxidfunktionellen Polymeren besitzen mindestens eine, bevorzugt mindestens zwei Epoxidfunktionen im Molekül und ein berechnetes Epoxidäquivalentgewicht von beispielsweise 150 bis 2000, bezogen auf Festharz. Die zahlenmittlere Molmasse (Mn) liegt bevorzugt bei 200 bis 10000.

Die bevorzugten epoxidfunktionellen (Meth)acrylcopolymeren, insbesondere Glycidyl(meth)acrylat-Copolymere besitzen zahlenmittlere Molmassen (Mn) von beispielsweise 1000 bis 10000, bevorzugt von 2000 bis 5000.

Die Herstellung der epoxidfunktionellen (Meth)acrylcopolymeren erfolgt durch radikalische Polymerisation, insbesondere Lösungspolymerisation, sie ist dem Fachmann bekannt. Bei der radikalischen Copolymerisation werden epoxidfunktionelle, radikalisch polymerisierbare, olefinisch ungesättigte Monomere (I) und davon unterschiedliche radikalisch copolymerisierbare Comonomere (II) in einem solchen Gewichtsverhältnis eingesetzt, daß für die erhaltenen (Meth)acrylcopolymeren ein berechnetes Epoxidäquivalentgewicht von 200 bis 1000, bevorzugt 250 bis 700, bezogen auf den Festkörper, resultiert.

Als epoxidfunktionelle radikalisch polymerisierbare, olefinisch ungesättigte Monomere (I) zur Herstellung der epoxidfunktionellen (Meth)acrylcopolymeren können z.B. eingesetzt werden (Meth)allylglycidylether, 3,4-Epoxy-1-vinylcyclohexan, Epoxycyclohexyl(meth)acrylat, Vinylglycidylether, insbesondere jedoch Glycidyl(meth)acrylat. Bevorzugt handelt es sich bei den epoxidfunktionellen (Meth)acrylcopolymeren um Glycidyl(meth)acrylat-Copolymere.

Neben den Epoxidgruppen können die (Meth)acrylcopolymeren Hydroxylgruppen enthalten, beispielsweise entsprechend einer auf den Festkörper bezogenen Hydroxylzahl von bis zu 200 mg KOH/g, beispielsweise 40 bis 200 mg KOH/g. Die Hydroxylgruppen können dabei beispielsweise aus hydroxylgruppenhaltigen Comonomeren (IIa), beispielsweise Hydroxyalkyl(meth)acrylate wie z.B. Hydroxyethyl(meth)acrylat, bezüglich der Stellung der Hydroxylgruppe isomere Hydroxypropyl(meth)acrylate, Hydroxybutyl(meth)acrylate und Umsetzungsprodukte aus (Meth)acrylsäure und dem Glycidylester einer Carbonsäure mit einem tertiären alpha-Kohlenstoffatom stammen.

Neben den epoxidfunktionellen, olefinisch ungesättigten Monomeren (I) und den gegebenenfalls enthaltenen hydroxyfunktionellen Comonomeren (IIa) können die epoxidfunktionellen (Meth)acrylcopolymeren weitere von (I) und (IIa) unterschiedliche radikalisch copolymerisierbare Comonomere (IIb) enthalten, die neben der olefinischen Doppelbindung keine in den Härtungsmechanismus der erfindungsgemäßen Überzugsmittel eingreifenden oder diesen störende funktionelle Gruppen, insbesondere keine weiteren funktionellen Gruppen enthalten, beispielsweise Alkylester der (Meth)acrylsäure, die im Alkylteil beispielsweise 1 bis 20 C-Atome oder mehr enthalten, wie z.B. Methyl(meth)acrylat, Ethyl(meth)acrylat, Propyl(meth)acrylat, Butyl(meth)acrylat, Isopropyl(meth)acrylat, Isobutyl(meth)acrylat, tertiär-Butyl(meth)acrylat, Hexyl(meth)acrylat, (Alkyl)cyclohexyl(meth)acrylat, (Iso)bornyl(meth)acrylat, 2-Ethylhexyl(meth)acrylat, Decyl(meth)acrylat, Hexadecyl(meth)acrylat, Lauryl(meth)acrylat; monovinylaromatische Verbindungen, wie alpha-Methylstyrol, die isomeren Methylstyrole, Vinyltoluole, insbesondere Styrol; Alkylester der Malein-, Fumar-, Tetrahydrophthal-, Croton-, Isocroton-, Vinylessig- und Itaconsäure, die im Alkylteil beispielsweise 1 bis 20 C-Atome oder mehr enthalten.

Die carboxyfunktionellen Nanopartikel werden mit epoxidfunktionellen Bindemitteln beispielsweise im Gewichtsverhältnis 5 bis 30 Gew.-% Nanopartikel zu 70 bis 95 Gew.-% epoxidfunktionellen Bindemittels oder zum Aufbau des epoxidfunktionellen Bindemittels eingesetzten Bindemittelbausteinen zu den erfindungsgemäßen Bindemitteln umgesetzt. Die Gew.-% beziehen sich dabei jeweils auf den Festkörper. Die Carboxylgruppen der Nanopartikel können dabei beispielsweise in einem Verhältnis zu den Epoxidgruppen des epoxidfunktionellem Bindemittels von 2 zu 1 bis 1 zu 100 vorliegen. Die Umsetzung kann dabei unter teilweisem oder vollständigem Verbrauch der Carboxylgruppen der Nanopartikel erfolgen. Die Reaktion kann beispielsweise bei erhöhten Temperaturen, beispielsweise 80 bis 160°C durchgeführt werden. Dabei können Katalysatoren für die Additionsreaktion von Carboxyl- und Epoxidgruppe eingesetzt werden. Beispielsweise kann die Umsetzung zwischen epoxidfunktionellen Bindemitteln als solchen mit den carboxyfunktionellen Nanopartikeln erfolgen oder die epoxidfunktionellen Bindemittel werden in Gegenwart der carboxyfunktionellen Nanopartikel erst hergestellt, wobei die Umsetzung zwischen Epoxidgruppe und Carboxylgruppe vor, während und/oder nach der eigentlichen Bindemittelsynthese erfolgen kann. Dabei kann die Umsetzung zwischen Epoxidgruppe und Carboxylgruppe lösemittelfrei oder bevorzugt in Gegenwart von organischem Lösemittel durchgeführt werden.

Die erfindungsgemäßen Bindemittel können neben den aus der beschriebenen Epoxy/Carboxy-Reaktion hervorgegangenen Hydroxylgruppen eine oder mehrere weitere funktionelle Gruppen aufweisen. Diese weiteren funktionellen Gruppen können beispielsweise in Hinsicht auf die beschriebene Epoxy/Carboxy-Reaktion im Überschuß vorhanden gewesene und/oder nicht umgesetzte Epoxid- und/oder Carboxylgruppen sein und/oder es handelt sich um andere funktionelle Gruppen, beispielsweise weitere Hydroxylgruppen, olefinisch ungesättigte Doppelbindungen, z.B. (Meth)acryloylgruppen. Die weiteren funktionellen Gruppen können aus den Nanopartikeln und/oder aus den als Edukt eingesetzten epoxidfunktionellen Bindemitteln stammen oder sie können nach der Herstellung der erfindungsgemäßen Bindemittel eingeführt werden.

Die erfindungsgemäßen mit Nanopartikeln modifizierten Bindemittel können als solche, bevorzugt jedoch nach Vermischen mit weiteren Bestandteilen als Überzugsmittel verwendet werden. Die Erfindung betrifft daher auch Überzugsmittel, die die erfindungsgemäßen mit Nanopartikeln modifizierten Bindemittel enthalten.

Es kann sich um thermoplastische, bevorzugt jedoch um duroplastische, selbst- oder fremdvernetzende Überzugsmittel handeln.

Thermoplastische Überzugsmittel enthalten keine Vernetzer und sie sind auch nicht selbstvernetzbar. Es handelt sich dabei z.B. um physikalisch trocknende Überzugsmittel.

Bevorzugt werden aus den erfindungsgemäßen Bindemitteln duroplastische Überzugsmittel hergestellt. Dann handelt es sich bei den erfindungsgemäßen Bindemitteln um solche, die eine oder mehrere reaktive Funktionalitäten aufweisen, welche die Grundlage für eine chemische Vernetzbarkeit liefern. Es kann sich um selbst- oder fremdvernetzende Bindemittel handeln. Im letzteren Fall enthalten die Überzugsmittel neben den mit Nanopartikeln modifizierten Lackbindemitteln Vernetzer.

Die Auswahl der Vernetzer richtet sich nach den in den mit Nanopartikeln modifizierten Lackbindemitteln enthaltenen funktionellen Gruppen, d.h. die Vernetzer werden so ausgewählt, daß sie eine zur Funktionalität der erfindungsgemäßen Bindemittel komplementäre, reaktive Funktionalität aufweisen, wobei die funktionellen Gruppen durch radikalische Polymerisation und/oder unter Addition und/oder Kondensation miteinander reagieren können. Beispiele für Additionsreaktionen sind die ringöffnende Addition einer Epoxidgruppe an eine Carboxylgruppe unter Bildung einer Ester- und einer Hydroxylgruppe, die Addition einer Hydroxyl- und/oder primären und/oder sekundären Aminogruppe an eine Isocyanatgruppe unter Bildung einer Urethan- und/oder Harnstoffgruppe, die Addition einer primären und/oder sekundären Aminogruppe und/oder CH-aciden Gruppe an eine alpha,beta-ungesättigte Carbonylgruppe, insbesondere (Meth)acryloylgruppe, die Addition einer primären und/oder sekundären Aminogruppe an eine Epoxidgruppe. Beispiele für Kondensationsreaktionen sind die Reaktion einer Hydroxyl- und/oder primären und/oder sekundären Aminogruppe mit einer blockierten Isocyanatgruppe unter Bildung einer Urethan- und/oder Harnstoffgruppe und Abspaltung des Blockierungsmittels, die Reaktion einer Hydroxylgruppe mit einer N-Methylolgruppe unter Wasserabspaltung, die Reaktion einer Hydroxylgruppe mit einer N-Methylolethergruppe unter Abspaltung des Veretherungsalkohols, die Umesterungsreaktion einer Hydroxylgruppe mit einer Estergruppe unter Abspaltung des Veresterungsalkohols, die Umurethanisierungsreaktion einer Hydroxylgruppe mit einer Carbamatgruppe unter Alkoholabspaltung, die Reaktion einer Carbamatgruppe mit einer N-Methylolethergruppe unter Abspaltung des Veretherungsalkohols. Sofern miteinander verträglich, können auch mehrere komplementäre Funktionalitäten in einem durch Additions- und/oder Kondensationsreaktionen härtbaren Überzugsmittel nebeneinander vorliegen, so daß zwei oder mehrere unterschiedliche der vorstehend beispielhaft genannten Reaktionstypen während der Härtung auftreten können.

Im Falle von durch radikalische Polymerisation fremdvernetzenden Überzugsmitteln kann es sich um thermisch oder photochemisch induziert radikalisch polymerisierbare Überzugsmittel handeln. Diese enthalten erfindungsgemäße, mit Nanopartikeln modifizierte Bindemittel mit radikalisch polymerisierbaren, olefinisch ungesättigten Gruppen sowie gegebenenfalls weitere radikalisch copolymerisierbare Komponenten. Beispiele für solche Komponenten sind Prepolymere, wie Poly- oder Oligomere, die radikalisch polymerisierbare, olefinische Doppelbindungen, insbesondere (Meth)acryloylgruppen im Molekül aufweisen, beispielsweise (meth)acrylfunktionelle (Meth)acrylcopolymere, Epoxidharz(meth)acrylate, Polyester(meth)acrylate, Polyether(meth)acrylate, Polyurethan(meth)acrylate, ungesättigte Polyester, ungesättigte Polyurethane oder Silikon(meth)acrylate, beispielsweise mit zahlenmittleren Molekularmassen (Mn) bevorzugt im Bereich von 200 bis 10000, besonders bevorzugt von 500 bis 3000 und beispielsweise mit durchschnittlich 2 bis 20, bevorzugt 3 bis 10 radikalisch polymerisierbaren, olefinischen Doppelbindungen pro Molekül. Ebenso können Reaktivverdünner, d.h. reaktive Monomere, wie z.B. (Meth)acrylsäure und deren Ester, Maleinsäure und deren Halbester, Vinylacetat, Vinylether, substituierte Vinylharnstoffe, Ethylen- und Propylenglykoldi(meth)acrylat, 1,3- und 1,4-Butandioldi(meth)acrylat, Vinyl(meth)acrylat, Allyl(meth)acrylat, Glycerintri- , -di- und -mono(meth)acrylat, Trimethylolpropantri-, -di- und -mono(meth)acrylat, Styrol, Vinyltoluol, Divinylbenzol, Pentaerythrittri- und -tetra(meth)acrylat, Di- und Tripropylenglykoldi(meth)acrylat, Hexandioldi(meth)acrylat enthalten sein. Die radikalisch härtenden Systeme können Photoinitiatoren bzw. thermische Radikalinitiatoren enthalten.

Bei den durch Additions- und/oder Kondensationsreaktionen härtbaren Überzugsmitteln kann es sich um ein- oder mehrkomponentige Lacksysteme handeln.

Bevorzugte ein- oder zweikomponentige Lacksysteme sind solche, die epoxidfunktionelle mit Nanopartikeln modifizierte Bindemittel, insbesondere epoxidfunktionelle mit Nanopartikeln modifizierte (Meth)acrylcopolymere in Kombination mit carboxylfunktionellen Vernetzern enthalten. Carboxylfunktionelle Vernetzer sind dem Fachmann bekannt und bedürfen keiner näheren Erläuterung.

Weitere Beispiele für bevorzugte ein- oder zweikomponentige Lacksysteme sind solche, die hydroxyfunktionelle (Meth)acrylcopolymere, Polyesterharze und/oder Polyurethanharze als mit Nanopartikeln modifizierte Bindemittel und mit den Hydroxylguppen der Bindemittel unter Ether- und/oder Estergruppenbildung vernetzende Komponenten auf Triazinbasis, beispielsweise Tris(alkoxycarbonylamino)triazin, Aminoplastharze, insbesondere Melaminharze und/oder Umesterungsvernetzer und/oder freie oder blockierte Polyisocyanate als Vernetzer enthalten. Derartige Vernetzer sind dem Fachmann bekannt und bedürfen keiner näheren Erläuterung.

Die erfindungsgemäßen Überzugsmittel können neben den mit Nanopartikeln modifizierten Bindemitteln weitere gegebenenfalls mit reaktiven Gruppen, insbesondere mit den gleichen reaktiven Gruppen wie die mit Nanopartikeln modifizierten Bindemittel ausgestattete lackübliche Bindemittel enthalten.

Beispielsweise liegen in den erfindungsgemäßen Überzugsmitteln sich zu 100 Gew.-% ergänzende Festkörpergewichtsverhältnisse von 60 bis 100 Gew.-% mit Nanopartikeln modifizierter Bindemittel zu 0 bis 40 Gew.-% Vernetzer zu 0 bis 40 Gew.-% weiterer Bindemittel vor.

Die erfindungsgemäßen Überzugsmittel können Pigmente und/oder Füllstoffe sowie lackübliche Additive in lacküblichen Mengen enthalten.

Die erfindungsgemäßen Überzugsmittel können lösemittelfrei formuliert werden oder sie enthalten lackübliche organische Lösemittel und/oder Wasser. Wäßrige Überzugsmittel können beispielsweise als Emulsion vorliegen. Dabei kann der emulgierte Zustand durch Zusatz externer Emulgatoren erreicht werden oder es handelt sich um Systeme, die in Wasser selbstemulgierend wirkende Gruppen, beispielsweise ionische Gruppen enthalten.

Die erfindungsgemäßen Überzugsmittel können zur Herstellung beliebiger Überzugsschichten verwendet werden, beispielsweise zur Herstellung von Grundierungs-, Basislack-, Füller-, Decklack-, Klarlackschichten. Sie können durch übliche Applikationsmethoden auf beliebige Substrate z.B. aus Metall, Kunststoff, Holz, Glas aufgebracht werden. Beispiele für Applikationsmethoden sind Streichen, Rollen, Rakeln, Tauchen, insbesondere aber Spritzen. Nach der Applikation werden die aus den erfindungsgemäßen Überzugsmitteln aufgebrachten Überzugsschichten nach einer gegebenenfalls gewährten Ablüft- oder Aufschmelzphase getrocknet oder gehärtet. Dies kann je nach Zusammensetzung der erfindungsgemäßen Überzugsmittel bei Raumtemperatur oder forciert bei erhöhten Temperaturen, beispielsweise 40 bis 80°C oder durch Einbrennen bei höheren Temperaturen, beispielsweise 80 bis 220°C erfolgen. Im Falle strahlenhärtbarer erfmdungsgemäßer Überzugsmittel erfolgt die Härtung durch Einwirkung energiereicher Strahlung, z.B. UV-Strahlung.

Die erfindungsgemäßen mit Nanopartikeln modifizierten Bindemittel zeigen weder bei ihrer Herstellung, Lagerung, bei oder nach ihrer Einarbeitung in Überzugsmittel noch bei oder nach Applikation der Überzugsmittel Verträglichkeitsprobleme zwischen Nanopartikeln und weiteren Bindemittel-, respektive Überzugsmittelbestandteilen. Die Bindemittel und Überzugsmittel sind lagerstabil. Die aus den erfindungsgemäßen Überzugsmitteln aufgebrachten Überzugsschichten besitzen beispielsweise sehr gute Oberflächeneigenschaften, insbesondere z.B. eine hohe Kratzfestigkeit und Chemikalienbeständigkeit.

### Beispiel 1

Eine Mischung aus 400 g Butyldiglykol und 122 g carboxylfunktionalisierter Nanopartikel auf Basis eines Silizium-Sauerstoff-Netzwerkes (Teilchengröße 15 nm, Säurezahl 90 mg KOH/g) wird auf 146°C erhitzt und man läßt während 4 Stunden eine Mischung aus 28 g Glycidylmethacrylat, 200 g 1,4-Butandiolmonoacrylat, 113 g Isobutylacrylat, 113 g Styrol, 21 g tert.-Butyl-per-2-ethylhexanoat und 3 g Di-tert.butylperoxid zutropfen. Anschließend wird 4 Stunden nachpolymerisiert.

### Beispiel 2

400 g Butyldiglykol werden auf 146°C erhitzt und man läßt während 4 Stunden eine Mischung aus 28 g Hydroxypropylmethacrylat, 200 g 1,4-Butandiolmonoacrylat, 174 g Isobutylacrylat, 174 g Styrol, 21 g tert.-Butyl-per-2-ethylhexanoat und 3 g Di-tert.butylperoxid zutropfen. Anschließend wird 4 Stunden nachpolymerisiert.

### Beispiel 3

### Herstellung einer Basislack/Klarlack-Zweischichtlackierung:

Ein schwarzer Wasserbasislack wird auf ein übliches, phosphatiertes und durch kathodische Tauchlackierung und mit Füller vorbeschichtetes Karosserieblech durch Spritzen in einer Trockenschichtdicke von 15 um aufgebracht. Nach der Applikation wird 5 Minuten bei 80°C vorgetrocknet. Anschliessend wird mit einem wie folgt hergestellten Klarlack in einer Trockenschichtdicke von 35 µm überlackiert und 20 Minuten bei 140°C (Objekttemperatur) eingebrannt.
Der Klarlack (Spritzviskosität DIN4 bei 20°C von 30 Sekunden) wird hergestellt, indem 132 g der in Beispiel 1 erhaltenen Harzlösung mit 48 g Butyldiglykol, 66 g n-Butanol, 2,3 g einer 4 gew.-%igen isopropanolischen Lösung von para-Toluolsulfonsäure, 40 g Methoxypropanol und 40 g einer 50 gew.-igen butanolischen Lösung eines Trisalkoxycarbonylammotriazin-Vernetzers (Cylink 2000 der Firma Cytec) gemischt werden.

### Beispiel 4

### Herstellung einer Basislack/Klarlack-Zweischichtlackierung:

Beispiel 3 wird wiederholt mit dem Unterschied, daß der Klarlack (Spritzviskosität DIN4 bei 20°C von 30 Sekunden) hergestellt wird, indem 132 g der in Beispiel 2 erhaltenen Harzlösung mit 20 g n-Butanol, 2,3 g einer 4 gew.-%igen isopropanolischen Lösung von para-Toluolsulfonsäure, 20 g Methoxypropanol und 40 g einer 50 gew.-%igen butanolischen Lösung eines Trisalkoxycarbonylaminotriazin-Vernetzers (Cylink 2000 der Firma Cytec) gemischt werden.

### Beispiel 5

Der Versuch in einen gemäß Beispiel 4 hergestellten Klarlack, wie in Beispiel 1 eingesetzte Nanopartikel durch nachträgliche Zugabe einzuarbeiten, gelingt nicht. Es kommt zu Unverträglichkeitserscheinungen.

Die Kratzfestigkeit der in Beispiel 3 und 4 erhaltenen Lackierungen wird durch Messung des Restglanzes nach Waschverkratzung bestimmt (Beispiel 3, Restglanz 84%; Beispiel 4, Restglanz 74%).

Gemessen wird der Restglanz in % (Verhältnis aus Anfangsglanz (20°) der Lackierung zu deren Glanz nach Waschverkratzung, Glanzmessung jeweils bei einem Beleuchtungswinkel von 20°). Die Waschverkratzung wird unter Verwendung der Laborwaschstraße der Firma Amtec Kistler durchgeführt (vgl. Th. Klimmasch und Th. Engbert, Entwicklung einer einheitlichen Laborprüfmethode für die Beurteilung der Waschstraßenbeständigkeit von Automobil-Decklacken, in DFO-Berichtsband 32, Seiten 59 bis 66, Technologie-Tage, Berichtsband des Seminars am 29. und 30.4.97 in Köln, Herausgeber Deutsche Forschungsgesellschaft für Oberflächenbehandlung e.V., Adersstraße 94, 40215 Düsseldorf).

## Patentansprüche

1. Für Überzugsmittel geeignete, Nanopartikel enthaltende Bindemittel, **dadurch gekennzeichnet, dass** sie erhältlich sind durch Umsetzung eines oder mehrerer epoxidfunktioneller Bindemittel mit carboxylfunktionellen Nanopartikeln, wobei die Nanopartikel aus einphasigen anorganischen, gegebenenfalls mit weiteren organischen Resten modifizierten Nanopartikeln und Nanopartikeln mit einem Kern/Hüll-Aufbau und anorganischem Kern, der gegebenenfalls mit weiteren organischen Resten modifiziert sein kann, ausgewählt werden.

2. Bindemittel nach Anspruch 1, **dadurch gekennzeichnet, dass** die Nanopartikel eine mittlere Teilchengrösse von 5 bis 200 nm aufweisen.

3. Verfahren zur Herstellung der Bindemittel nach Anspruch 1 oder 2, **dadurch gekennzeichnet, dass** man ein oder mehrere epoxidfunktionelle Bindemittel mit carboxylfunktionellen Nanopartikeln umsetzt.

4. Verfahren zur Herstellung der Bindemittel nach Anspruch 1 oder 2, **dadurch gekennzeichnet, dass** man die epoxidfunktionellen Bindemittel in Gegenwart der carboxylfunktionellen Nanopartikel herstellt, wobei die Umsetzung zwischen Epoxidgruppe und Carboxylgruppe vor während und/oder nach der eigentlichen Bindemittelsynthese erfolgen kann.

5. Überzugsmittel, enthaltend ein oder mehrere Bindemittel gemäss einem der Ansprüche 1 oder 2.

6. Verwendung der Bindemittel gemäss einem der Ansprüche 1 oder 2 bei der Herstellung von Beschichtungen.

## Claims

1. Nanoparticle-containing binding agents suitable for coating agents, **characterised in that** they can be obtained by reaction of one or more epoxide-functional binding agents with carboxyl-functional nanoparticles, in which the nanoparticles are selected from single phase inorganic nanoparticles optionally modified with further organic radicals and nanoparticles with a core/shell structure and an inorganic core that may optionally be modified with further organic radicals.

2. Binding agents according to claim 1, **characterised in that** the nanoparticles have a mean particle size of 5 to 200 nm.

3. Process for the production of the binding agents according to claim 1 or 2, **characterised in that** one or more epoxide-functional binding agents are reacted with carboxyl-functional nanoparticles.

4. Process for the production of the binding agents according to claim 1 or 2, **characterised in that** the epoxide-functional binding agents are produced in the presence of the carboxyl-functional nanoparticles, wherein the reaction between epoxide group and carboxyl group may take place before, during and/or after the actual synthesis of the binding agent.

5. Coating agents containing one or more binding agent according to one of claims 1 or 2.

6. Use of the binding agents according to one of claims 1 or 2 in the production of coatings.

## Revendications

1. Liants contenant des nanoparticules adaptés aux substances de revêtement, **caractérisés en ce qu'**ils peuvent être obtenus par la transformation d'un ou plusieurs liants époxy fonctionnels avec des nanoparticules carboxyle fonctionnelles, où les nanoparticules sont sélectionnées parmi des nanoparticules anorganiques monophasiques, modifiées, le cas échéant, avec d'autres radicaux organiques, et des nanoparticules d'une structure noyau/enveloppe et d'un noyau anorganique, pouvant être modifiées avec d'autres radicaux organiques, le cas échéant.

2. Liants selon la revendication 1, **caractérisés en ce que** les nanoparticules sont d'une grandeur élémentaire moyenne de 5 à 200 nm.

3. Procédé pour la fabrication de liants selon la revendication 1 ou 2, **caractérisé en ce qu'**un ou plusieurs liants époxy fonctionnels sont transformés avec des nanoparticules carboxyles fonctionnelles.

4. Procédé pour la fabrication de liants selon la revendication 1 ou 2, **caractérisé en ce que** les liants époxy fonctionnels sont fabriqués en présence des nanoparticules carboxyles fonctionnels, et où la transformation entre le groupe époxy et le groupe carboxyle peut être réalisée avant, pendant et/ou après la synthèse des liants à proprement parler.

5. Revêtements comportant un ou plusieurs liants selon l'une des revendications 1 ou 2.

6. Utilisation des liants selon l'une des revendications 1 ou 2 dans la fabrication de revêtements.
